# EUROPEAN PATENT SPECIFICATION

(11) **EP 2 198 132 B1**
(45) Date of publication and mention of the grant of the patent: **16.03.2011**
(21) Application number: 08828406.2
(22) Date of filing: 01.09.2008
(51) Int. Cl.: F01N 3/025, F01N 3/08

(54) **EXHAUST GAS APPARATUS AND METHOD FOR THE REGENERATION OF A NOX TRAP AND A PARTICLE FILTER**
ABGASVORRICHTUNG UND VERFAHREN ZUR REGENERATION EINER NOX-FALLE UND EINES PARTIKELFILTERS
DISPOSITIF DE GAZ D'ÉCHAPPEMENT ET PROCÉDÉ DE RÉGÉNÉRATION D'UN PIÈGE À NOx ET D'UN FILTRE À PARTICULES

(30) Priority: 30.08.2007 US 968899 P
(43) Date of publication of application: 23.06.2010
(73) Proprietor: Energy Conversion Technology As, 1367 Snarøya (NO)
(72) Inventor: ØVREBØ, Dag, N-3921 Porsgrunn (NO); LUCKA, Klaus, D-52072 Aachen (DE); VOM SCHLOSS, Heide, Pohland, D-52134 Herzogenrath (DE)
(74) Representative: Onsagers AS
(86) International application number: PCT/NO2008/000310
(87) International publication number: WO 2009/028958

(56) References cited:
- US-A1- 2003 226 350
- US-A1- 2005 274 107
- US-B1- 6 793 693

## Description

The present invention relates to apparatus for regenerating a NOx trap and the regeneration of a particle filter and a NOx trap in a single operation. The invention is also related to a method for the regeneration of a NOx trap and a method for regenerating a particle filter and a NOx trap in a single operation. The invention further relates to the use of the apparatus and the methods with a compression ignition engine, i.e. what is often called a diesel engine.

The cold flame is a phenomenon which has so far not received to much attention. In a cold flame the fuel is partially oxidized in preheated air and the temperature is kept constant at about 450°C, and it is independent of air/fuel ratio and residence time. In the cold flame process, only 2-20% of the calorific value of the fuel is released, and this heat is used to evaporate the fuel, giving a homogenous gaseous fuel. During developmental work, it has been observed that the gas was able to remove carbon deposits from the reactor walls. The reason for this has not been established yet, but is thought to be due to free radicals that are present in the cold flame gas, i.e. the partially oxidized, gaseous fuel.

A more complete description of the cold flame gas phenomenon can be found in the American patent, US 6,793,693.

Exhaust from compression ignition engines (often imprecisely called diesel engines), which operate on excess air, contains mainly particulates, NOx and incomplete combustion products (HC and CO). Particulates can be removed using a filter downstream from the engine. After a while, the filter will be blocked and need to be regenerated. This is done by increasing the temperature in the exhaust gas to above 600°C under oxidizing conditions and thereby burning away the carbon deposits. In order to allow for continuous operation, it is common to have two filters in parallel and a valve which sends the majority of the exhaust to one of the filters while the other is being regenerated.

Incomplete combustion products (HC and CO) can be removed by an oxidation catalyst.

NOx, on the other hand, can only be removed catalytically if the exhaust gas is slightly reducing (as in an Otto engine). This is not normally the case in a compression ignition engine. Since the regenerating of the particle requires an oxidizing environment while the regenerating of the NOx trap requires a slightly reducing environment, there has not been available a method for regenerating the particle filter and the NOx trap in a single operation.

One way to reduce NOx emissions in a diesel engine is to recirculate some of the exhaust back into the engine (EGR).

While the above method reduces the NOx formation, it is also possible to remove NOx by inserting an NOx absorbent, as described in several patent documents, for instance US 5,974,791. An NOx absorbent can be made from barium carbonate. During absorption, the absorbent is converted to barium nitrate and releases CO₂ at the same time. When the absorbent is saturated, it can be regenerated using CO in that the barium nitrate is converted back to barium carbonate and release N₂ gas.

For a complete treatment of the exhaust gas, a particle filter + an NOx absorber (NOx trap) + an oxidation catalyst is used. The problem is, as already mentioned, that the particle filter has to be regenerated under high temperature (600°C) in an oxidizing environment while the NOx absorber is regenerated at lower temperatures in a reducing environment (500 °C with CO gas). This means that two process operations are needed in order to clean both the particle filter and the NOx trap, as described in the American patent US 6,955,042.

In US 2005/0274107 A1 there is disclosed a method for reforming liquid hydrocarbon fuel, but the process which is described in D1 is, however, not a process for obtaining a cold flame gas as defined in the present application. In paragraph 0010 it is stated that the temperature in the mixing chamber where the "cold flame" process takes place is between 700°C and 1200°C. If the temperature in a cold flame is increased to the temperature range indicated in US 2005/0274107 A1, the cold flame self ignites in the presence of surplus oxygen (and in the cold flame process there is always a surplus of oxygen). Furthermore, it is stated in US 2005/0274107 A1 that the air/fuel ratio may be as low as 0.014, i.e. the chemical reaction taking place is choked by restricting the availability of oxygen. In a cold flame process the air/fuel ratio is self-regulating, and is normally about 0.7 if air only is added and possibly down to 0.3 if both air and steam is added. Thus, the process described in D1 is not within the range of the air/fuel ratio required to form the cold flame gas.

There is therefore an objective of the present invention to find a new way to regerate an NOx trap.

A further objective of the present invention has been to find a way to regenerate the particle filter and the NOx trap in a single operation.

These objectives are achieved by the present invention as defined in the independent claims. Further embodiments of the invention is defined in the dependent claims.

There is provided an exhaust gas cleaning apparatus for the cleaning of exhaust gas flowing in an exhaust gas conduit. The exhaust cleaning apparatus comprises at least one NOx trap arranged in the exhaust gas conduit such that the NOx trap at least partially removes NOx from the exhaust gas flowing through the exhaust gas conduit. The exhaust gas cleaning apparatus further comprises a cold flame vaporizer wherein fuel is partially oxidized in preheated air to form a cold flame gas. The cold flame vaporizer is arranged in fluid communication with the exhaust gas conduit such that the cold flame gas can flow through the NOx trap in the exhaust gas conduit, thereby regenerating the NOx trap.

The cold flame vaporizer is a standard cold flame vaporizer in which the fuel can be partially oxidized in preheated air. In the cold flame vaporizer air and fuel is mixed in a proportion of typically 0,3 - 1,0 (1,0 is stoichiometric air/fuel ratio), but only a small fraction of the air is used in the cold flame reaction.

The exhaust gas conduit may be a pipe or similar of any cross sectional shape, or the exhaust gas conduit may be formed as internal conduits in a larger body.

The means for preheating the air may be a heat exchanger in which the heat of the exhaust gas warms up the air. It would also be possible to use other means for preheating the, for instance electrical heating means.

The cold flame vaporizer may be arranged outside the exhaust gas conduit and, if necessary, connected to the exhaust gas conduit with fluid lines. If the cold flame vaporizer is mounted to the exhaust gas conduit, then there may only be necessary to provide openings into the exhaust gas conduit, while if the cold flame vaporizer is arranged separate from the exhaust gas conduit, fluid lines will be provided connecting the cold flame vaporizer and the exhaust gas conduit.

In an embodiment of the invention, the cold flame vaporizer can also be arranged inside the exhaust gas conduit. In that case, there is no need for fluid lines as the cold flame vaporizer may just release the cold flame gas into the exhaust gas conduit through openings including said valve means.

The exhaust gas cleaning apparatus further comprises valve means controlling the flow of cold flame gas from the cold flame vaporizer into the exhaust gas conduit.

The exhaust gas cleaning apparatus is further provided with one or more valve means which controls the flow of exhaust gas through the exhaust gas conduit. When regenerating the NOx trap in the exhaust gas conduit, the flow of exhaust gas can therefore at least partially be shut off.

These valve means may be controlled such that the NOx trap is regenerated, for instance, at specific time intervals, or when the pressure drop across NOx trap reaches a predetermined level indicating that the NOx trap needs to be regenerated.

Furthermore, the exhaust gas cleaning apparatus comprises a fuel supply which is arranged in fluid communication with the cold flame vaporizer. The exhaust gas cleaning apparatus also comprises an air supply and means for preheating the air, the air supply being in fluid communication with the cold flame vaporizer. In order to control the flow of fuel and preheated air into the cold flame vaporizer, the exhaust gas apparatus comprises one or more valve means controlling the flow of fuel and preheated air to said cold flame vaporizer.

There is also provided an exhaust gas apparatus for the cleaning of exhaust gas, the exhaust gas apparatus comprising an exhaust conduit section which is formed with at least two separate flow paths. Each flow path is provided with a particle filter for the removal of particulate matter from the exhaust gas and an NOx trap for the removal of NOx from the exhaust gas. The exhaust gas apparatus further comprises at least one cold flame vaporizer in which fuel is partially oxidized in preheated air to form a cold flame gas. The cold flame vaporizer is arranged in fluid communication with each of the flow paths in the exhaust conduit section such that the cold flame gas can flow through the particle filter and the NOx trap. There is further provided valve means for controlling the flow of cold flame gas from the cold flame vaporizer to each flow path in the exhaust conduit section, whereby both the particle filter and the NOx trap in at least one of the flow paths can be regenerated in a single operation.

The cold flame vaporizer is a standard cold flame vaporizer in which the fuel can be partially oxidized in preheated air. In the cold flame vaporizer air and fuel is mixed in a proportion of typically 0,3 - 1,0 (1,0 is stoichiometric air/fuel ratio), but only a small fraction of the air is used in the cold flame reaction.

The exhaust gas conduit may be a pipe or similar of any cross sectional shape, or the exhaust gas conduit may be formed as internal conduits in a larger body.

The means for preheating the air may be a heat exchanger in which the heat of the exhaust gas warms up the air. It would also be possible to use other means for preheating the air, for instance electrical heating means.

The flow paths may be formed by providing the exhaust gas return conduit, at least along a part of its length, with one or more partitions such that two or more separate flow paths for the exhaust gas are formed in the exhaust conduit section. These partitions may be one or more plates dividing the exhaust gas return conduit in two or more flow paths. Alternatively, the flow paths may be formed by providing the exhaust gas return conduit with at least two separate conduits through which the exhaust gas can flow.

The cold flame vaporizer may be arranged outside the exhaust conduit section and, if necessary, connected to the exhaust conduit section with fluid lines. If the cold flame vaporizer is mounted to the exhaust conduit section, then there may only be necessary to provide openings into the exhaust conduit section, while if the cold flame vaporizer is arranged separate from the exhaust conduit section, fluid lines will be provided connecting the cold flame vaporizer and the exhaust conduit section.

In an embodiment of the invention, the at least one cold flame vaporizer can also be arranged inside the exhaust conduit section. In that case, there is no need for fluid lines as the cold flame vaporizer may just release the cold flame gas into the exhaust gas conduit through openings including said valve means.

The exhaust gas apparatus is preferably provided with one or more valve means which controls the flow of exhaust gas through the flow paths of the exhaust conduit section. The valve means may close off one or more flow paths for the flow of exhaust gas. The exhaust gas apparatus is preferably also provided with one or more valve means controlling the flow of cold flame gas from the at least one cold flame vaporizer to the flow paths of exhaust conduit section and the particle filters and NOx traps in the flow paths. These valve means may be controlled such that the particle filters and NOx traps are regenerated, for instance, at specific time intervals, or when the pressure drop across a particle filter and/or NOx trap reaches a predetermined level indicating that the particle filter and the NOx trap needs to be regenerated.

The exhaust gas apparatus further comprises a fuel supply which is arranged in fluid communication with the at least one cold flame vaporizer. Preferably, there is also provided valve means controlling the flow of fuel to the at least one cold flame vaporizer.

The exhaust gas apparatus also comprises an air supply and, as mentioned above, means for preheating the air, the air supply being arranged in fluid communication with the at least one cold flame vaporizer. Preferably, there is also provided valve means controlling the flow of preheated air to the at least one cold flame vaporizer.

In each flow path, the NOx trap is preferably arranged downstream of the particle filter so that particulate matter in the exhaust gas can be removed before reaching the NOx trap.

Preferably, the exhaust gas apparatus also comprises an oxidation catalyst arranged downstream of the particle filter and the NOx trap.

There is also provided a method for regenerating an NOx trap which removes NOx from exhaust gas flowing in an exhaust gas conduit, the NOx trap being provided in the exhaust gas conduit, the method comprising the following steps:
- providing a cold flame gas,
- letting the cold flame gas flow through the NOx trap, thereby regenerating the NOx trap.

There is also provided a method for regenerating cleaning means for exhaust gas flowing in an exhaust gas conduit where the cleaning means comprises a particle filter for the removal of particulate matter from the exhaust gas and an NOx trap for the removal of NOx from the exhaust gas wherein the particle filter and the NOx trap being arranged in the exhaust gas conduit. The method comprises the following steps:
- providing a cold flame gas,
- letting the cold flame gas flow through the particle filter and the NOx trap, thereby regenerating both the particle filter and the NOx trap in a single operation.

Again, the cold flame gas may be provided by partially oxidizing fuel in preheated air in a cold flame vaporizer which is arranged in fluid communication with the exhaust conduit. In the cold flame vaporizer air and fuel is mixed in a proportion of typically 0,3 - 1,0, but only a small fraction of the air is used in the cold flame reaction.

In order to remove particulate matter from the exhaust gas before the exhaust gas passes through the NOx trap, the method also comprises the step of arranging the NOx trap downstream of the particle filter.

The method also comprises the step of providing one or more valve means for controlling the flow of cold flame gas from the cold flame vaporizer into the exhaust gas conduit.

The method also comprises the step of providing a fuel supply arranged in fluid communication with the cold flame vaporizer, and an air supply and heating means for the preheating of the air, the air supply being arranged in fluid communication with the cold flame vaporizer. Furthermore, the method comprises the step of providing valve means for controlling the flow of fuel and preheated air to the cold flame vaporizer.

There is also provided a method for regenerating cleaning means for exhaust gas flowing through an exhaust conduit section of an exhaust gas conduit, the exhaust conduit section being formed with at least two flow paths for the exhaust gas. The cleaning means are provided in each of the flow paths and comprises
- a particle filter for the removal of particulate matter from the exhaust gas,
- an NOx trap for the removal of NOx from the exhaust gas

The method comprises the following steps:
- providing a cold flame gas,
- letting the cold flame gas flow through the particle filter and the NOx trap in at least one of the flow paths of the exhaust conduit section.

The particle filter and the NOx trap in the at least one flow path are thereby both, in one operation, regenerated.

As mentioned several times, the cold flame gas may be provided by partially oxidizing fuel in preheated air in at least one cold flame vaporizer which is arranged in fluid communication with all the flow paths of the exhaust conduit section. In the cold flame vaporizer air and fuel is mixed in a proportion of 0,3 - 1,0 (again 1,0 is stoichiometric air/fuel ratio), but only a small fraction of the air is used in the cold flame reaction.

The method also comprises the step of providing one or more valve means for separately controlling the flow of cold flame gas from the cold flame vaporizer into each flow path of the exhaust gas conduit.

Furthermore, the method also comprises the step of providing a fuel supply arranged in fluid communication with the cold flame vaporizer, and an air supply and heating means for the preheating of the air, the air supply being arranged in fluid communication with the cold flame vaporizer.

The method also comprises the step of providing one or more valve means for controlling the flow of fuel and preheated air to the cold flame vaporizer.

The method also comprises the step of arranging, in each flow path in the exhaust conduit section, the NOx trap downstream of the respective particle filter.

The method also comprises the step of arranging an oxidation catalyst in the exhaust conduit section downstream of the particle filter and the NOx trap.

There is also provided a use of the exhaust gas cleaning apparatus where the NOx trap is arranged in the exhaust conduit of a compression ignition engine.

There is also provided a use of the exhaust gas apparatus wherein the exhaust conduit section forms part of the exhaust gas conduit of a compression ignition engine.

There is also provided a use of the method for regenerating an NOx trap wherein the NOx trap is arranged in the exhaust conduit of a compression ignition engine.

There is also provided a use of the methods for regenerating cleaning means for exhaust gas, the cleaning means comprising a particle filter and an NOx trap, with a compression ignition engine.

Above, only a cold flame gas produced by a cold flame vaporizer has been mentioned. A cold flame is one method to achieve a partially oxidized fuel gas among a number of other partially oxidized fuel gases with the same properties. The present invention should therefore not be seen as limited to only a cold flame gas, but should include other partially oxidized fuel gases with the same or similar properties as the cold flame gas.

In the following, an embodiment of the invention is disclosed in detail with reference to the enclosed figures, where
Figure 1 illustrates an embodiment of the invention where a NOx trap is arranged in an exhaust conduit.
Figure 2a illustrates an embodiment of the invention where a particle filter and a NOx trap is arranged in a section of an exhaust conduit which is .
Figure 2b is an illustration of the section A-A through the particle filter in figure 2a.
Figure 2c is an illustration of the section B-B through the NOx trap in figure 2a.
Figure 3a illustrates a similar embodiment of the invention where a particle filter and a NOx trap is arranged in a section of an exhaust conduit.
Figure 3b an illustration of the section A-A through the particle filter in figure 3a.
Figure 3c an illustration of the section B-B through the particle filter in figure 3a.

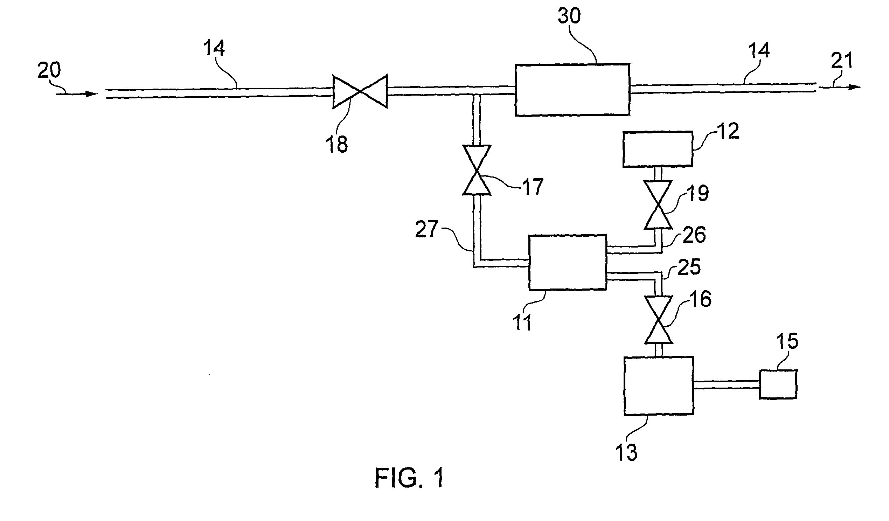

Figure 1 illustrates a first embodiment of the invention. An exhaust gas flows in an exhaust gas conduit 14 with valve means 18 controlling the flow of exhaust gas through a NOx trap 30.

There is also provided a cold flame vaporizer 11 with a fuel supply 12, which may be diesel or heavy fuel oil, and an air supply 13. The air supply may be provided with an air intake 15 including an air filter (not shown). Valve means 16, 19 controls the flow of air through fluid line 25 and flow of fuel through fluid line 26 to the cold flame vaporizer 11 respectively.

When the NOx trap needs to be regenerated, valve means 18 is preferably closed and valve means 17 is opened such that cold flame gas can flow through the NOx trap, thereby regenerating it.

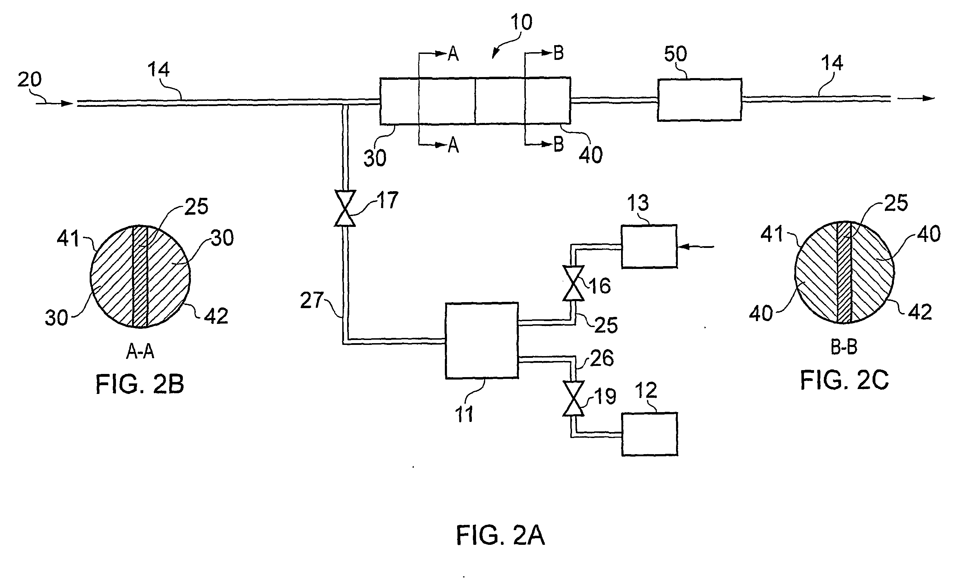

In figure 2a-2c there is shown a second embodiment of the invention. Exhaust gas, indicated by arrow 20 on the figure, flows in exhaust gas conduit 14 and through an exhaust conduit section 10 comprising at least a particle filter 30 and a NOx trap 40. Further downstream there is provided an oxidation catalyst 50. The oxidation catalyst could also be placed together with the particle filter 30 and the NOx trap 40.

The exhaust conduit section 10 is formed with two separate flow paths as can easily be seen on figure 2b and 2c, which illustrate sections through the particle filter 30 and the NOx trap 40 respectively. The two flow paths are formed by a partition 25 dividing the exhaust conduit section 10 in two parts in the longitudinal direction. In each flow path there is provided a particle filter 30 and a NOx trap 40. There is also provided means, like valve means, to control the flow of exhaust gas and cold flame gas through the exhaust conduit section 10.

There is also provided a cold flame vaporizer 11 with a fuel supply 12 and an air supply 13. There is no difference from the first embodiment of the invention shown in figure 1, so it will not be described any further here.

When the particle filters 30 and the NOx traps 40, arranged in the fluid paths 41 and 42 in the exhaust conduit section 10, are to be regenerated using the cold flame gas from the cold flame vaporizer 11, one of the flow paths 41, 42 is closed for the flow of exhaust 20 while the other flow path is kept open for the flow of exhaust gas. Valve means 17 are opened and cold flame gas flows through the flow path 41, 42 which has been for the flow of exhaust gas. The particle filter 30 and the NOx trap 40 in that flow path are thereby regenerated in one operation while exhaust gas is allowed to flow through the other flow path. There is therefore not necessary to stop the engine from which the exhaust gas originates.

When the particle filter and the NOx trap in one flow path 41, 42 have been regenerated, the valve means switches positions so that the exhaust gas now flows through the flow path 41, 42 containing the regenerated particle filter and NOx trap, while the cold flame gas is directed through the flow path 41, 42 in which the particle filter 30 and NOx trap 40 is not yet regenerated. The regeneration of the particle filter 30 and the NOx trap 40 can thereby be carried out in one operation without having to stop the engine.

In this embodiment of the invention, the exhaust conduit section 10 is provided with only two flow paths 41, 42. It is however, possible to provide any number of flow paths for the exhaust gas through the exhaust conduit section 10

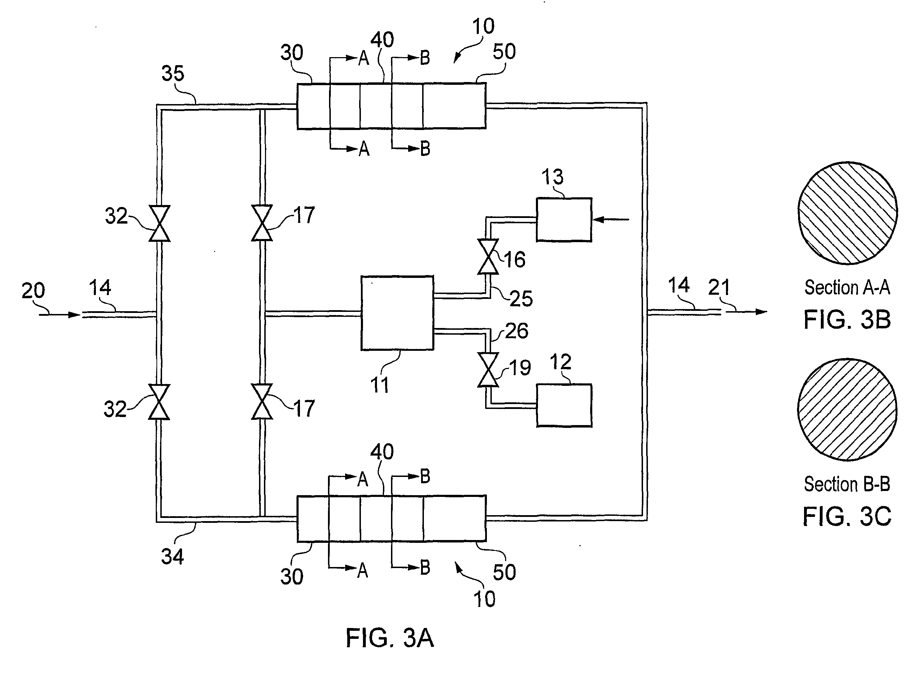

In figure 3a-3c a very similar embodiment of the invention to the embodiment on figure 2a-2c, is shown. Again the cold flame vaporizer 11 with its fuel supply 12 and air supply 13 is identical to what has already been described and will not be repeated.

The embodiment of the invention shown on figure 3a-3c is also provided with two flow paths 34, 35 through which the exhaust gas may flow, but are now in the form of two separate exhaust gas conduits. There is also provided fluid lines so that cold flame gas from the cold flame vaporizer 11 can flow through the two flow paths 34, 35.

Flow paths 34, 35 are provided with valve means 32, 33 which control the flow of exhaust gas through the two flow paths. Valve means 17 control the flow of cold flame gas to through the two flow paths 34, 35.

Both flow paths are provided with a exhaust conduit section 10 comprising at least a particle filter 30 and a NOx trap 40. On figure 3a it is also shown that the exhaust conduit section 10 comprises an oxidation catalyst, but this is optional as mentioned above.

As before, when the particle filters 30 and the NOx traps 40 need to be regenerated, one of the flow paths 32, 33 is closed for the flow of exhaust gas by valve means 32, 33 and the one of valve means 17 opens such that cold flame gas from the cold flame vaporizer 11 is directed to and flows through the exhaust conduit section 10 which has been closed for the flow of exhaust gas. The particle filter 30 and the NOx trap in one of the exhaust conduit sections 34, 35 are regenerated by the cold flame gas in one operation.

Later the direction of flow of exhaust gas and cold flame gas through the two exhaust conduit sections will change so that the particle filter 30 and the NOx trap 40 in the other exhaust conduit section 10 are also regenerated by the cold flame gas.

Figure 3b and 3c are sections through the particle filters 30 and the NOx trap 40 respectively. As can be seen on the figure, the filters cover substantially the whole cross section as opposed to the embodiment shown in figure 2a-2c.

Again, the embodiment shown on figure 3a-3c are provided with two flow paths 34, 35, but it would be possible to provide as many flow paths as is necessary for any given purpose.

## Claims

1. Exhaust gas apparatus for the cleaning of exhaust gas, the exhaust gas apparatus comprising an exhaust conduit section (10) which is formed with at least two separate flow paths (34, 35; 41, 42), each flow path being provided with
- a particle filter (30) for the removal of particulate matter from the exhaust gas,
- a NOx trap (40) for the removal of NOx from the exhaust gas,
**characterized in that** the exhaust gas apparatus further comprises
- at least one cold flame vaporizer (11) in which fuel is partially oxidized in preheated air to form a cold flame gas, the cold flame vaporizer (11) being arranged in fluid communication with each of the flow paths (34, 35; 41, 42) in the exhaust conduit section (10) such that the cold flame gas can flow through the particle filter (30) and the NOx trap (40), and
- valve means (17) for controlling the flow of cold flame gas from the cold flame vaporizer to each flow path (34, 35; 41, 42) in the exhaust conduit section (10), whereby both the particle filter (30) and the NOx trap (40) in at least one of the flow paths (34, 35; 41, 42) can be regenerated in a single operation.

2. Exhaust gas apparatus according to claim 1,
**characterized in that** the flow paths (34, 35; 41, 42) are formed by providing the exhaust conduit section (10) with one or more partitions such that two or more separate flow paths for the exhaust gas are formed in the exhaust conduit section (10).

3. Exhaust gas apparatus according to claim 1,
**characterized in that** the flow paths are formed by providing the exhaust conduit section (10) with at least two separate conduits through which the exhaust gas can flow.

4. Exhaust gas apparatus according to one of the claims 1-3,
**characterized in that** the at least one cold flame vaporizer (11) is arranged outside the flow paths and that the cold flame vaporizer (11), if necessary, is connected to each of the flow paths (34, 35; 41, 42) of the exhaust conduit section (10) by fluid lines or conduits.

5. Exhaust gas apparatus according to one of the claims 1-3,
**characterized in that** the at least one cold flame vaporizer (11) is arranged within the exhaust conduit section (10).

6. Exhaust gas apparatus according to one of the claims 1-5,
**characterized in that** exhaust gas apparatus comprises one or more valve means controlling the flow of exhaust gas through each of the flow paths of the exhaust conduit section (10).

7. Exhaust gas apparatus according to one of the claims 1-6,
**characterized in that** the exhaust gas apparatus comprises a fuel supply (12) which is arranged in fluid communication with the cold flame vaporizer (11).

8. Exhaust gas apparatus according one of the claims 1-7,
**characterized in that** the exhaust gas apparatus comprises an air supply (13) and heating means for preheating the air, the air supply (13) being arranged in fluid communication with the cold flame vaporizer (11).

9. Exhaust gas apparatus according to claim 7 or 8,
**characterized in that** the exhaust gas apparatus comprises one or more valve means (16, 19) controlling the flow of fuel and preheated air to the cold flame vaporizer (11).

10. Exhaust gas apparatus according to one of the claims 1-9,
**characterized in that**, in each flow path (34, 35; 41, 42), the NOx trap (40) is arranged downstream of the particle filter (30).

11. Exhaust gas apparatus according to one of the claims 1-10,
**characterized in that** the exhaust gas apparatus comprises an oxidation catalyst (50) arranged downstream of the particle filter (30) and the NOx trap (40).

12. Method for regenerating cleaning means for exhaust gas flowing through an exhaust conduit section (10) of an exhaust gas conduit, the exhaust conduit section (10) being formed with at least two flow paths (34, 35; 41, 42) for the exhaust gas, the cleaning means being provided in each of the flow paths (34, 35; 41, 42) and comprising a particle filter (30) for the removal of particulate matter from the exhaust gas, a NOx trap (40) for the removal of NOx from the exhaust gas,
**characterized in that** the method comprises the following steps:
- providing a cold flame gas,
- letting the cold flame gas flow through the particle filter (30) and the NOx trap (40) in at least one of the flow paths (34, 35; 41, 42) of the exhaust conduit section (10), thereby, in one operation, regenerating both the particle filter (30) and the NOx trap (40) in said at least one flow path (34, 35; 41, 42).

13. Method according to claim 12,
**characterized by** providing one or more valve means for separately controlling the flow of cold flame gas from the cold flame vaporizer into each flow path of the exhaust gas conduit.

14. Method according to claim 12 or 13,
**characterized** b y providing a fuel supply (12) arranged in fluid communication with the cold flame vaporizer (11), and an air supply (13) and heating means for the preheating of the air, the air supply (13) being arranged in fluid communication with the cold flame vaporizer (11).

15. Method according to one of the claims 12-14,
**characterized by** providing one or more valve means (16, 19) for controlling the flow of fuel and preheated air to the cold flame vaporizer (11).

16. Method according to one of the claims 12-15,
**characterized by** arranging, in each flow path (34, 35; 41, 42) in the exhaust conduit section (10), the NOx trap (40) downstream of the respective particle filter (30).

17. Method according to one of the claims 12-16,
**characterized by** arranging an oxidation catalyst (50) in the exhaust conduit section (10) downstream of the particle filter (30) and the NOx trap (40).

18. Use of a cold flame gas to regenerate a NOx trap (40).

19. Use of the exhaust gas apparatus according to one of the claims 1-11,
wherein the exhaust conduit section (10) forms part of the exhaust gas conduit of a compression ignition engine.

20. Use of a cold flame gas to regenerate a particle filter (30) and a NOx trap (40) in a single operation.

21. Use of the method for regenerating cleaning means according to one of the claims 12-17, with a compression ignition engine.

## Patentansprüche

1. Abgasvorrichtung zum Reinigen von Abgas, wobei die Abgasvorrichtung einen Abgasleitungsabschnitt (10) umfasst, der mit mindestens zwei separaten Strömungswegen (34, 35; 41, 42) ausgebildet ist, wobei jeder Strömungsweg versehen ist mit
- einem Partikelfilter (30) zum Entfernen von Schwebstoffteilchen aus dem Abgas;
- einer NOx-Falle (40) zum Entfernen von Stickoxiden aus dem Abgas;
**dadurch gekennzeichnet, dass** die Abgasvorrichtung darüber hinaus umfasst:
- mindestens einen Kaltflammenverdampfer (11), in dem Kraftstoff teilweise in vorerwärmter Luft oxidiert wird, um ein Kaltflammengas zu bilden, wobei der Kaltflammenverdampfer (11) derart in Fluidverbindung mit jedem der Strömungswege (34, 35; 41, 42) im Abgasleitungsabschnitt (10) angeordnet ist, dass das Kaltflammengas durch den Partikelfilter (30) und die NOx-Falle (40) strömen kann, und
- Ventileinrichtungen (17), um den Strom von Kaltflammengas aus dem Kaltflammenverdampfer zu jedem Strömungsweg (34, 35; 41, 42) im Abgasleitungsabschnitt (10) zu regeln, wodurch sowohl der Partikelfilter (30) als auch die NOx-Falle (40) in mindestens einem der Strömungswege (34, 35; 41, 42) in einem einzigen Arbeitsablauf regeneriert werden können.

2. Abgasvorrichtung nach Anspruch 1,
**dadurch gekennzeichnet, dass** die Strömungswege (34, 35; 41, 42) **dadurch** gebildet sind, dass der Abgasleitungsabschnitt (10) derart mit einer Trennwand oder mehreren Trennwänden versehen ist, dass zwei oder mehr separate Strömungswege für das Abgas im Abgasleitungsabschnitt (10) gebildet sind.

3. Abgasvorrichtung nach Anspruch 1,
**dadurch gekennzeichnet, dass** die Strömungswege **dadurch** gebildet sind, dass der Abgasleitungsabschnitt (10) mit mindestens zwei separaten Leitungen versehen ist, durch die das Abgas strömen kann.

4. Abgasvorrichtung nach einem der Ansprüche 1 bis 3,
**dadurch gekennzeichnet, dass** der mindestens eine Kaltflammenverdampfer (11) außerhalb der Strömungswege angeordnet ist, und dass der Kaltflammenverdampfer (11) gegebenenfalls durch Fluidleitungen oder -kanäle an jeden der Strömungswege (34, 35; 41, 42) des Abgasleitungsabschnitts (10) angeschlossen ist.

5. Abgasvorrichtung nach einem der Ansprüche 1 bis 3,
**dadurch gekennzeichnet, dass** der mindestens eine Kaltflammenverdampfer (11) innerhalb des Abgasleitungsabschnitts (10) angeordnet ist.

6. Abgasvorrichtung nach einem der Ansprüche 1 bis 5,
**dadurch gekennzeichnet, dass** die Abgasvorrichtung eine oder mehrere Ventileinrichtung/en umfasst, die den Strom von Abgas durch jeden der Strömungswege des Abgasleitungsabschnitts (10) regelt/regeln.

7. Abgasvorrichtung nach einem der Ansprüche 1 bis 6,
**dadurch gekennzeichnet, dass** die Abgasvorrichtung eine Kraftstoffzufuhr (12) umfasst, die in Fluidverbindung mit dem Kaltflammenverdampfer (11) angeordnet ist.

8. Abgasvorrichtung nach einem der Ansprüche 1 bis 7,
**dadurch gekennzeichnet, dass** die Abgasvorrichtung eine Luftzufuhr (13) und Heizeinrichtungen zum Vorerwärmen der Luft umfasst, wobei die Luftzufuhr (13) in Fluidverbindung mit dem Kaltflammenverdampfer (11) angeordnet ist.

9. Abgasvorrichtung nach Anspruch 7 oder 8,
**dadurch gekennzeichnet, dass** die Abgasvorrichtung eine oder mehrere Ventileinrichtung/en (16, 19) umfasst, die den Strom von Kraftstoff und vorerwärmter Luft zum Kaltflammenverdampfer (11) regelt/regeln.

10. Abgasvorrichtung nach einem der Ansprüche 1 bis 9,
**dadurch gekennzeichnet, dass** in jedem der Strömungswege (34, 35; 41, 42) die NOx-Falle (40) nach dem Partikelfilter (30) angeordnet ist.

11. Abgasvorrichtung nach einem der Ansprüche 1 bis 10,
**dadurch gekennzeichnet, dass** die Abgasvorrichtung einen Oxidationskatalysator (50) umfasst, der nach dem Partikelfilter (30) und der NOx-Falle (40) angeordnet ist.

12. Verfahren zum Regenerieren von Reinigungseinrichtungen für Abgas, das durch einen Abgasleitungsabschnitt (10) einer Abgasleitung strömt, wobei der Abgasleitungsabschnitt (10) mit mindestens zwei Strömungswegen (34, 35; 41, 42) für das Abgas ausgebildet ist, wobei die Reinigungseinrichtungen in jedem der Strömungswege (34, 35; 41, 42) vorgesehen sind und einen Partikelfilter (30) zum Entfernen von Schwebstoffteilchen aus dem Abgas und eine NOx-Falle (40) zum Entfernen von Stickoxid aus dem Abgas umfassen,
**dadurch gekennzeichnet, dass** das Verfahren die folgenden Schritte umfasst:
- Breitstellen eines Kaltflammengases,
- Bewirken, dass das Kaltflammengas durch den Partikelfilter (30) und die NOx-Falle (40) in mindestens einem der Strömungswege (34, 35; 41, 42) des Abgasleitungsabschnitts (10) strömt, wodurch sowohl der Partikelfilter (30) als auch die NOx-Falle (40) in dem mindestens einen Strömungsweg (34, 35; 41, 42) in einem Arbeitsablauf regeneriert werden.

13. Verfahren nach Anspruch 12,
**gekennzeichnet durch** ein Bereitstellen einer oder mehrerer Ventileinrichtung/en, um den Strom von Kaltflammengas aus dem Kaltflammenverdampfer in jeden Strömungsweg der Abgasleitung separat zu regeln.

14. Verfahren nach Anspruch 12 oder 13,
**gekennzeichnet durch** ein Bereitstellen einer Kraftstoffzufuhr (12), die in Fluidverbindung mit dem Kaltflammenverdampfer (11) angeordnet ist, und einer Luftzufuhr (13) und Heizeinrichtungen zum Vorerwärmen der Luft, wobei die Luftzufuhr (13) in Fluidverbindung mit dem Kaltflammenverdampfer (11) angeordnet ist.

15. Verfahren nach einem der Ansprüche 12 bis 14,
**gekennzeichnet durch** ein Bereitstellen einer oder mehrerer Ventileinrichtung/en (16, 19), um den Strom von Kraftstoff und vorerwärmter Luft zum Kaltflammenverdampfer (11) zu regeln.

16. Verfahren nach einem der Ansprüche 12 bis 15,
**gekennzeichnet durch** ein Anordnen der NOx-Falle (40) nach dem jeweiligen Partikelfilter (30) in jedem Strömungsweg (34, 35; 41, 42) im Abgasleitungsabschnitt (10).

17. Verfahren nach einem der Ansprüche 12 bis 16,
**gekennzeichnet durch** ein Anordnen eines Oxidationskatalysators (50) im Abgasleitungsabschnitt (10) nach dem Partikelfilter (30) und der NOx-Falle.

18. Verwendung eines Kaltflammengases, um eine NOx-Falle (40) zu regenerieren.

19. Verwendung der Abgasvorrichtung nach einem der Ansprüche 1 bis 11, wobei
der Abgasleitungsabschnitt (10) einen Teil der Abgasleitung eines Dieselmotors bildet.

20. Verwendung eines Kaltflammengases, um einen Partikelfilter (30) und eine NOx-Falle (40) in einem einzigen Arbeitsablauf zu regenerieren.

21. Verwendung des Verfahrens zum Regenerieren von Reinigungseinrichtungen nach einem der Ansprüche 12 bis 17, bei einem Dieselmotor.

## Revendications

1. Appareil de gaz d'échappement pour le nettoyage de gaz d'échappement, l'appareil de gaz d'échappement comprenant une section de conduit d'échappement (10) qui est formée avec au moins deux trajets d'écoulement séparés (34, 35 ; 41, 42), chaque trajet d'écoulement étant doté de :
- un filtre à particules (30) pour l'élimination de matières particulaires à partir du gaz d'échappement,
- un piège à NOx (40) pour l'élimination de NOx à partir du gaz d'échappement,
**caractérisé en ce que** l'appareil de gaz d'échappement comprend en outre
- au moins un vaporiseur à flamme froide (11) dans lequel du carburant est partiellement oxydé dans de l'air préchauffé pour former un gaz à flamme froide, le vaporiseur à flamme froide (11) étant agencé en communication fluidique avec chacun des trajets d'écoulement (34, 35 ; 41, 42) dans la section de conduit d'échappement (10) de sorte que le gaz à flamme froide puisse s'écouler à travers le filtre à particules (30) et le piège à NOx (40), et
- des moyens de soupape (17) pour commander l'écoulement de gaz à flamme froide à partir du vaporiseur à flamme froide vers chaque trajet d'écoulement (34, 35 ; 41, 42) dans la section de conduit d'échappement (10), moyennant quoi le filtre à particules (30) ainsi que le piège à NOx (40) dans au moins un des trajets d'écoulement (34, 35 ; 41, 42) peuvent être régénérés en une seule opération.

2. Appareil de gaz d'échappement selon la revendication 1,
**caractérisé en ce que** les trajets d'écoulement (34, 35 ; 41, 42) sont formés en dotant la section de conduit d'échappement (10) d'une ou de plusieurs cloisons de séparation de sorte que deux, ou plus, trajets d'écoulement séparés pour le gaz d'échappement soient formés dans la section de conduit d'échappement (10).

3. Appareil de gaz d'échappement selon la revendication 1,
**caractérisé en ce que** les trajets d'écoulement sont formés en dotant la section de conduit d'échappement (10) d'au moins deux conduits séparés à travers lesquels le gaz d'échappement peut s'écouler.

4. Appareil de gaz d'échappement selon une des revendications 1 à 3,
**caractérisé en ce que** l'au moins un vaporiseur à flamme froide (11) est agencé à l'extérieur des trajets d'écoulement et que le vaporiseur à flamme froide (11), le cas échéant, est raccordé à chacun des trajets d'écoulement (34, 35 ; 41, 42) de la section de conduit d'échappement (10) par des conduites ou des conduits de fluide.

5. Appareil de gaz d'échappement selon une des revendications 1 à 3,
**caractérisé en ce que** l'au moins un vaporiseur à flamme froide (11) est agencé à l'intérieur de la section de conduit d'échappement (10).

6. Appareil de gaz d'échappement selon une des revendications 1 à 5,
**caractérisé en ce que** l'appareil de gaz d'échappement comprend un ou plusieurs moyens de soupape commandant l'écoulement de gaz d'échappement à travers chacun des trajets d'écoulement de la section de conduit d'échappement (10).

7. Appareil de gaz d'échappement selon une des revendications 1 à 6,
**caractérisé en ce que** l'appareil de gaz d'échappement comprend une alimentation en carburant (12) qui est agencée en communication fluidique avec le vaporiseur à flamme froide (11).

8. Appareil de gaz d'échappement selon une des revendications 1 à 7,
**caractérisé en ce que** l'appareil de gaz d'échappement comprend une alimentation en air (13) et des moyens de chauffage pour préchauffer l'air, l'alimentation en air (13) étant agencée en communication fluidique avec le vaporiseur à flamme froide (11).

9. Appareil de gaz d'échappement selon la revendication 7 ou 8,
**caractérisé en ce que** l'appareil de gaz d'échappement comprend un ou plusieurs moyens de soupape (16, 19) commandant l'écoulement de carburant et d'air préchauffé vers le vaporiseur à flamme froide (11).

10. Appareil de gaz d'échappement selon une des revendications 1 à 9,
**caractérisé en ce que**, dans chaque trajet d'écoulement (34, 35 ; 41, 42), le piège à NOx (40) est agencé en aval du filtre à particules (30).

11. Appareil de gaz d'échappement selon une des revendications 1 à 10,
**caractérisé en ce que** l'appareil de gaz d'échappement comprend un catalyseur à oxydation (50) agencé en aval du filtre à particules (30) et du piège à NOx (40).

12. Méthode pour régénérer des moyens de nettoyage pour un gaz d'échappement s'écoulant à travers une section de conduit d'échappement (10) d'un conduit de gaz d'échappement, la section de conduit d'échappement (10) étant formée avec au moins deux trajets d'écoulement (34, 35 ; 41, 42) pour le gaz d'échappement, les moyens de nettoyage étant prévus dans chacun des trajets d'écoulement (34, 35 ; 41, 42) et comprenant un filtre à particules (30) pour l'élimination de matières particulaires à partir du gaz d'échappement, un piège à NOx (40) pour l'élimination de NOx à partir du gaz d'échappement,
**caractérisée en ce que** la méthode comprend les étapes suivantes consistant à :
- fournir un gaz à flamme froide,
- laisser le gaz à flamme froide s'écouler à travers le filtre à particules (30) et le piège à NOx (40) dans au moins un des trajets d'écoulement (34, 35 ; 41, 42) de la section de conduit d'échappement (10), régénérant ainsi, en une opération, le filtre à particules (30) ainsi que le piège à NOx (40) dans ledit au moins un trajet d'écoulement (34, 35 ; 41, 42).

13. Méthode selon la revendication 12,
**caractérisée par** l'étape consistant à fournir un ou plusieurs moyens de soupape pour commander séparément l'écoulement de gaz à flamme froide à partir du vaporiseur à flamme froide dans chaque trajet d'écoulement du conduit de gaz d'échappement.

14. Méthode selon la revendication 12 ou 13,
**caractérisée par** l'étape consistant à fournir une alimentation en carburant (12) agencée en communication fluidique avec le vaporiseur à flamme froide (11), et une alimentation en air (13) et des moyens de chauffage pour le préchauffage de l'air, l'alimentation en air (13) étant agencée en communication fluidique avec le vaporiseur à flamme froide (11).

15. Méthode selon une des revendications 12 à 14,
**caractérisée par** l'étape consistant à fournir un ou plusieurs moyens de soupape (16, 19) pour commander l'écoulement de carburant et d'air préchauffé vers le vaporiseur à flamme froide (11).

16. Méthode selon une des revendications 12 à 15,
**caractérisée par** l'étape consistant à agencer, dans chaque trajet d'écoulement (34, 35 ; 41, 42) dans la section de conduit d'échappement (10), le piège à NOx (40) en aval du filtre à particules respectif (30).

17. Méthode selon une des revendications 12 à 16,
**caractérisée par** l'étape consistant à agencer un catalyseur à oxydation (50) dans la section de conduit d'échappement (10) en aval du filtre à particules (30) et du piège à NOx (40).

18. Utilisation d'un gaz à flamme froide pour régénérer un piège à NOx (40).

19. Utilisation de l'appareil de gaz d'échappement selon une des revendications 1 à 11,
dans laquelle la section de conduit d'échappement (10) fait partie du conduit de gaz d'échappement d'un moteur à allumage par compression.

20. Utilisation d'un gaz à flamme froide pour régénérer un filtre à particules (30) et un piège à NOx (40) en une seule opération.

21. Utilisation de la méthode pour régénérer des moyens de nettoyage selon une des revendications 12 à 17, avec un moteur à allumage par compression.
